(19) **Europäisches Patentamt / European Patent Office / Office européen des brevets**

(11) **EP 4 400 555 B1**

(12) **EUROPEAN PATENT SPECIFICATION**

(45) Date of publication and mention of the grant of the patent:
**31.12.2025 Bulletin 2026/01**

(21) Application number: **22867089.9**

(22) Date of filing: **20.07.2022**

(51) International Patent Classification (IPC):
**C09K 5/04** *(2006.01)*    **F25B 1/00** *(2006.01)*

(52) Cooperative Patent Classification (CPC):
**C09K 5/045**; C09K 2205/126; C09K 2205/22; C09K 2205/40; Y02P 20/10

(86) International application number:
**PCT/JP2022/028257**

(87) International publication number:
**WO 2023/037767 (16.03.2023 Gazette 2023/11)**

(54) **COMPOSITION CONTAINING REFRIGERANT, USE OF SAME, REFRIGERATOR COMPRISING SAME, AND METHOD FOR OPERATING REFRIGERATOR**

ZUSAMMENSETZUNG MIT KÜHLMITTEL, VERWENDUNG DAVON, KÜHLSCHRANK DAMIT UND VERFAHREN ZUM BETRIEB DES KÜHLSCHRANKS

COMPOSITION CONTENANT UN FLUIDE FRIGORIGÈNE, SON UTILISATION, RÉFRIGÉRATEUR LA COMPRENANT, ET PROCÉDÉ DE FONCTIONNEMENT DU RÉFRIGÉRATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2021 JP 2021148113**

(43) Date of publication of application:
**17.07.2024 Bulletin 2024/29**

(60) Divisional application:
**25180980.2 / 4 592 614**

(73) Proprietor: **DAIKIN INDUSTRIES, LTD.**
**Osaka-Shi, Osaka 530-0001 (JP)**

(72) Inventors:
• **ITANO, Mitsushi**
  **Osaka-Shi, Osaka 530-0001 (JP)**
• **TSUCHIYA, Tatsumi**
  **Osaka-Shi, Osaka 530-0001 (JP)**
• **NAKAUE, Tsubasa**
  **Osaka-Shi, Osaka 530-0001 (JP)**
• **GOTOU, Tomoyuki**
  **Osaka-Shi, Osaka 530-0001 (JP)**
• **USUI, Takashi**
  **Osaka-Shi, Osaka 530-0001 (JP)**
• **YOSHIMURA, Takashi**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(56) References cited:
WO-A1-2015/186557    WO-A1-2016/190177
JP-A- 2016 011 423    US-A1- 2021 079 280

# EP 4 400 555 B1

## Description

### Technical Field

The present disclosure relates to a composition comprising a refrigerant, use of the composition, a refrigerating machine having the composition, and a method for operating the refrigerating machine.

### Background Art

As a working medium for a heat cycle that can replace R410A, a working medium for a heat cycle comprising trifluoroethylene (HFO-1123) and 1,2-difluoroethylene (HFO-1132) has been proposed (WO 2015/141678).

### Summary of Invention

### Technical Problem

An object of the present disclosure is to provide a novel low-GWP mixed refrigerant.

### Solution to Problem

The present invention provides a composition comprising a refrigerant comprising, based on the entire refrigerant, a total of $\geq$ 99.5 mass% of trans-1,2-difluoroethylene (HFO-1132(E)), 2,3,3,3-tetrafluoropropene (HFO-1234yf), and 1,1,1,2-tetrafluoroethane (R134a).

Also, the present invention provides a composition comprising a refrigerant comprising, based on the entire refrigerant, a total of $\geq$ 99.5 mass% of HFO-1132(E), HFO-1234yf, and 1,1,2,3,3,3-hexafluoro-1-propene (FO-1216).

Further, the present invention provides the use of the above compositions as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R502, R507, R513A, R1234yf, or R1234ze.

Yet further the present invention provides (i) the use of the above compositions in operating an air-conditioning system for vehicles, (ii) a refrigeration method comprising operating a refrigeration cycle using the above compositions and (iii) a refrigeration apparatus comprising the above compositions as a working fluid.

Even further, the present invention provides the above compositions further comprising a refrigeration oil; and the use of these compositions as a working fluid in a refrigeration apparatus.

Preferred embodiments of the invention are as defined in the appended dependent claims and/or in the following detailed description.

### Advantageous Effects of Invention

The refrigerant of the present disclosure has a low GWP.

### Brief Description of Drawings

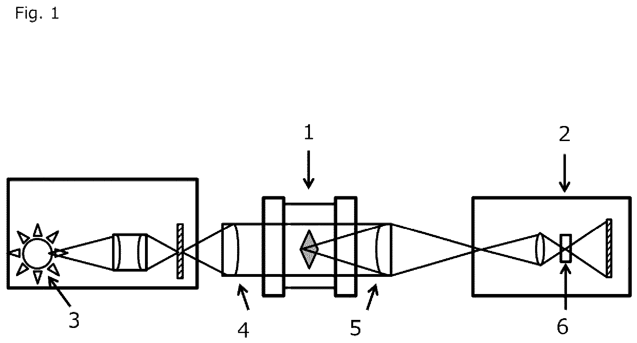

Fig. 1 is a schematic view of an apparatus used in a flammability test.

### Description of Embodiments

The present inventors conducted intensive studies to solve the above problem, and consequently found that various mixed refrigerants described below have the above properties.

The present disclosure has been completed as a result of further research based on this finding. The present disclosure includes the following embodiments.

### Definition of Terms

In the present specification the following definitions apply.

The term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC).

The phrase "composition comprising a refrigerant" at least includes (1) a refrigerant itself (including a mixture of refrigerants), (2) a composition that further comprises other components and that can be mixed with at least a refrigeration oil to obtain a working fluid in a refrigerating machine, and (3) a working fluid in a refrigerating machine containing a refrigeration oil. Of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

When the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

The term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

The term "air-conditioning system for vehicles" is a type of refrigeration apparatus for use in vehicles, such as gasoline vehicles, hybrid vehicles, electric vehicles, and hydrogen vehicles. The air-conditioning system for vehicles refers to a refrigeration apparatus that has a refrigeration cycle in which heat exchange is performed by an evaporator using a liquid refrigerant, the evaporated refrigerant gas is absorbed by a compressor, the adiabatically compressed refrigerant gas is cooled and liquefied with a condenser, the liquefied refrigerant is adiabatically expanded by passing it through an expansion valve, and then the refrigerant is supplied again in the form of a liquid to the evaporator.

The unit for the pressure described herein is absolute pressure, unless otherwise specified.

1. Refrigerant

The present refrigerant comprises HFO-1132 (E) and HFO-1234yf.

The present refrigerant is a low-GWP mixed refrigerant.

The present refrigerant may be a refrigerant comprising, based on the entire refrigerant, a total of $\geq 99.5$ mass% of trans-1,2-difluoroethylene (HFO-1132(E)), 2,3,3,3-tetrafluoropropene (HFO-1234yf), and 1,1,1,2-tetrafluoroethane (R134a.

In the present refrigerant, the content of HFO-1132 (E) may be 14.0-44.0 mass%, the content of HFO-1234yf may be 35.2-79.0 mass%, and the content of R134a may be 7.0-20.8 mass%, based on the total of HFO-1132(E), HFO-1234yf, and R134a. This refrigerant has a GWP of 300 or less, a COP ratio of 100% or more relative to that of HFO-1234yf, a refrigerating capacity ratio of 134% or more relative to that of HFO-1234yf, a burning velocity that, by containing 7.0 mass% or more of R134a, is reduced by 1.0 cm/s or more compared with the same composition except that R134a is not contained, and a boiling point of -40.0°C or less, and further does not undergo a disproportionation reaction at 3 MPa and 150°C.

Thus, the present refrigerant is preferable because a disproportionation reaction can be suppressed even when the refrigerant pressure is locally 3 MPa and the refrigerant temperature is locally 150°C in the refrigeration cycle.

Moreover, the present refrigerant has the advantage of ease of use in heating with a heat pump since it has a boiling point of -40.0°C or less. For example, using the present refrigerant for operating a refrigeration cycle in an air-conditioning system for vehicles is advantageous in enabling heating with a heat pump that consumes less power than electric heaters. Examples of air-conditioning systems for vehicles include air-conditioning systems for gasoline vehicles, hybrid vehicles, electric vehicles, and hydrogen vehicles.

In the present refrigerant, the content of HFO-1132 (E) may be 21.0-44.0 mass%, the content of HFO-1234yf may be 35.2-72.0 mass%, and the content of R134a may be 7.0-20.8 mass%, based on the total of HFO-1132(E), HFO-1234yf, and R134a.

In the present refrigerant, the content of HFO-1132 (E) may be 14.0-44.0 mass%, the content of HFO-1234yf may be 35.2-79.0 mass%, and the content of R134a may be 7.0-20.8 mass%, based on the total of HFO-1132(E), HFO-1234yf, and R134a. This refrigerant is preferably used to operate air-conditioning systems for vehicles.

The present refrigerant may comprise, based on the entire refrigerant, a total of $\geq$ 99.5 mass% of HFO-1132(E), HFO-1234yf, and 1,1,2,3,3,3-hexafluoro-1-propene (FO-1216).

In the present refrigerant, the content of HFO-1132 (E) may be 12.5-44.0 mass%, the content of HFO-1234yf may be 16.0-72.5 mass%, and the content of FO-1216 may be 15.0-40.0 mass%, based on the total of HFO-1132(E), HFO-1234yf, and FO-1216. This refrigerant has a GWP of 3 or less, a COP ratio of 99% or more relative to that of HFO-1234yf, a refrigerating capacity ratio of 128% or more relative to that of HFO-1234yf, a burning velocity that, by containing 15.0% mass% or more of FO-1216, is reduced by 1.0 cm/s or more, and a boiling point of -40.0°C or less, and further does not undergo a disproportionation reaction at 3 MPa and 150°C.

Thus, the present refrigerant is preferable because a disproportionation reaction can be suppressed even when the refrigerant pressure is locally 3 MPa and the refrigerant temperature is locally 150°C in the refrigeration cycle.

Moreover, the present refrigerant has the advantage of ease of use in heating with a heat pump since it has a boiling point of -40.0°C or less. For example, using the present refrigerant for operating a refrigeration cycle in an air-conditioning system for vehicles is advantageous in enabling heating with a heat pump that consumes less power than electric heaters. Examples of air-conditioning systems for vehicles include air-conditioning systems for gasoline vehicles, hybrid vehicles, electric vehicles, and hydrogen vehicles.

In the present refrigerant, the content of HFO-1132 (E) may be 21.0-44.0 mass%, the content of HFO-1234yf may be 16.0-72.5 mass%, and the content of FO-1216 may be 15.0-40.0 mass%, based on the total of HFO-1132(E), HFO-1234yf, and FO-1216.

In the present refrigerant, the content of HFO-1132 (E) may be 21.0-44.0 mass%, the content of HFO-1234yf may be 16.0-64.0 mass%, and the content of FO-1216 may be 15.0-40.0 mass%, based on the total of HFO-1132(E), HFO-1234yf, and FO-1216.

When the present refrigerant comprises HFO-1132(E), HFO-1234yf, and R134a, it may further comprise additional refrigerants, in addition to HFO-1132(E), HFO-1234yf, and R134a, as long as the above properties and effects are not impaired. In this respect, in one embodiment, the present refrigerant preferably comprises HFO-1132(E), HFO-1234yf, and R134a in a total amount of 99.7 mass% or more, more preferably 99.75 mass% or more, even more preferably 99.9 mass% or more, still even more preferably 99.999 mass% or more, and most preferably 99.9999 mass% or more, based on the entire refrigerant. The present refrigerant may essentially consist of HFO-1132(E), HFO-1234yf, and R134a. In this case, the present refrigerant may consist of HFO-1132(E), HFO-1234yf, and R134a, as well as unavoidable impurities. The present refrigerant may consist of HFO-1132(E), HFO-1234yf, and R134a.

When the present refrigerant comprises HFO-1132(E), HFO-1234yf, and FO-1216, it may further comprise additional refrigerants, in addition to HFO-1132(E), HFO-1234yf, and FO-1216, as long as the above properties and effects are not impaired. In this respect, in one embodiment, the present refrigerant preferably comprises HFO-1132(E), HFO-1234yf, and FO-1216 in a total amount of 99.5 mass% or more, more preferably 99.75 mass% or more, even more preferably 99.9 mass% or more, still even more preferably 99.999 mass%, and most preferably 99.9999 mass% or more, based on the entire refrigerant. The present refrigerant may essentially consist of HFO-1132(E), HFO-1234yf, and FO-1216. In this case, the present refrigerant may consist of HFO-1132(E), HFO-1234yf, and FO-1216, as well as unavoidable impurities. The present refrigerant may consist of HFO-1132(E), HFO-1234yf, and FO-1216.

Additional refrigerants are not limited and can be widely selected. The mixed refrigerant may contain one additional refrigerant, or two or more additional refrigerants.

Examples of the additional refrigerants include acetylene, HFO-1132a, HFO-1141, HFO-1123, HFC-143a, HFC-134a, Z-HFO-1132, HFO-1243zf, HFC-245cb, HCFC-1122, HCFC-124, CFC-1113, and 3,3,3-trifluoropropyne.

## 2. Refrigerant Composition

The present refrigerant composition comprises at least the refrigerant according to the present disclosure, and can be used for the same use as the present refrigerant. Moreover, the present refrigerant composition can be further mixed with at least a refrigeration oil to thereby obtain a working fluid in a refrigerating machine.

The present refrigerant composition further comprises at least one other component in addition to the present refrigerant. The present refrigerant composition may comprise at least one of the following other components, if necessary. As described above, when the present refrigerant composition is used as a working fluid in a refrigerating machine, it is generally used as a mixture with at least a refrigeration oil. Therefore, it is preferable that the present refrigerant composition does not substantially comprise a refrigeration oil. Specifically, in the present refrigerant composition, the content of the refrigeration oil based on the entire refrigerant composition is preferably 1 mass% or less, and more preferably 0.1 mass% or less.

## 2.1 Water

The present refrigerant composition may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

## 2.2 Tracer

A tracer is added to the present refrigerant composition at a detectable concentration such that when the refrigerant composition has been diluted, contaminated, or undergone other changes, the tracer can trace the changes.

The present refrigerant composition may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a hydrochlorocarbon, a fluorocarbon, or a fluoroether.

The following compounds are preferred as the tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3F$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143a (1,1,1-trifluoroethane, $CF_3CH_3$)
HFC-143 (1,1,2-trifluoroethane, $CHF_2CH_2F$)
HFC-152a (1,1-difluoroethane, $CHF_2CH_3$)
HFC-152 (1,2-difluoroethane, $CH_2FCH_2F$)
HFC-161 (fluoroethane, $CH_3CH_2F$)
HFC-245fa (1, 1, 1, 3, 3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH2CF_3$)

The present refrigerant composition may comprise one or more tracers at a total concentration of about 10 parts per million by weight (ppm) or more based on the entire refrigerant composition. The present refrigerant composition may comprise one or more tracers at a total concentration of about 1000 ppm or less, based on the entire refrigerant composition. The present refrigerant composition preferably comprises one or more tracers at a total concentration of about 30 ppm or more, and more preferably about 50 ppm or more, based on the entire refrigerant composition. The present refrigerant composition preferably comprises one or more tracers at a total concentration of about 500 ppm or less, and more preferably about 300 ppm or less, based on the entire refrigerant composition.

## 2.3 Ultraviolet Fluorescent Dye

The present refrigerant composition may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4 Stabilizer

The present refrigerant composition may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is preferably 0.01 mass% or more, and more preferably 0.05 mass% or more, based on the entire refrigerant. The content of the stabilizer is preferably 5 mass% or less, and more preferably 2 mass% or less, based on the entire refrigerant.

### 2.5 Polymerization Inhibitor

The present refrigerant composition may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is preferably 0.01 mass% or more, and more preferably 0.05 mass% or more, based on the entire refrigerant. The content of the polymerization inhibitor is preferably 5 mass% or less, and more preferably 2 mass% or less, based on the entire refrigerant.

### 3. Refrigeration Oil-Containing Working Fluid

The present refrigeration oil-containing working fluid comprises at least the present refrigerant or the present refrigerant composition and a refrigeration oil, for use as a working fluid in a refrigerating machine. Specifically, the present refrigeration oil-containing working fluid is obtained by mixing a refrigeration oil used in a compressor of a refrigerating machine with the refrigerant or the refrigerant composition. The refrigeration oil-containing working fluid generally comprises 10 mass% or more of refrigeration oil. The refrigeration oil-containing working fluid generally comprises 50 mass% or less of refrigeration oil.

### 3.1 Refrigeration Oil

The present composition may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from antioxidants, extreme-pressure agents, acid scavengers, oxygen scavengers, copper deactivators, rust inhibitors, oil agents, and antifoaming agents.

A refrigeration oil with a kinematic viscosity of 0.000005 $m^2$/s (5 cSt) or more at 40°C is preferable from the standpoint of lubrication. Further, a refrigeration oil with a kinematic viscosity of 0.0004 $m^2$/s (400 cSt) or less at 40°C is preferable from the standpoint of lubrication.

The present refrigeration oil-containing working fluid may further optionally contain at least one additive. Examples of additives include compatibilizing agents described below.

## 3.2 Compatibilizing Agent

The present refrigeration oil-containing working fluid may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

## 4. Method for Operating Refrigerating Machine

The present method for operating a refrigerating machine is a method for operating a refrigerating machine using the present refrigerant.

Specifically, the present method for operating a refrigerating machine comprises the step of circulating the present refrigerant in a refrigerating machine.

## 5. Method for Suppressing Disproportionation Reaction

The present method for suppressing a disproportionation reaction is a method for suppressing a disproportionation reaction of HFO-1132(E), the method comprising operating a refrigeration cycle using the present refrigerant.

The present method for suppressing a disproportionation reaction produces an effect of preventing a disproportionation reaction of HFO-1132(E) from occurring, in particular, even at a refrigerant pressure of 3.0 MPa and a refrigerant temperature of 150°C.

By the present method for suppressing a disproportionation reaction, a refrigeration cycle can also be operated while suppressing a disproportionation reaction, in a refrigerating machine that has no particular means for suppressing a disproportionation reaction.

## 6. Use for Suppressing Disproportionation Reaction

The present use is use of R134a, or FO-1216, and R1234yf for suppressing a disproportionation reaction of HFO-1132(E); the suppression of the disproportionation reaction is achieved by mixing HFO-1132(E) with R134a, or FO-1216, and R1234yf such that the mixing ratio thereof is equal to that used in the refrigerant according to the present disclosure.

The present use for suppressing a disproportionation reaction produces an effect of preventing a disproportionation reaction of HFO-1132(E) from occurring, in particular, even at a refrigerant pressure of 3.0 MPa and a refrigerant temperature of 150°C.

## Examples

The present disclosure is described in more detail below with reference to Examples.

Mixed refrigerants were prepared by mixing HFO-1132 (E) and HFO-1234yf at the mass% shown in Table 1 based on their sum.

Each of these mixed refrigerants was examined in terms of the presence or absence of a disproportionation reaction by using the following test methods under the following conditions.

## Test Methods

A refrigerant composition to be tested was transferred to a test container and heated to 150°C. Subsequently, a Pt wire in the container was melted and cut by applying a voltage, giving the refrigerant composition 30 J of energy. The presence or absence of disproportionation reaction was determined based on a rapid increase in the pressure and temperature in the apparatus.

## Test Conditions

Test container: 38-cc SUS container

Test temperature: 150°C
Pressure: 3 MPa

Determination Criteria

Non-explosion: The temperature or pressure after the melting and cutting of the Pt wire increased to less than twice, and no rapid disproportionation reaction occurred.
Explosion: The temperature or pressure increased to twice or more after the melting and cutting of the Pt wire, and a rapid disproportionation reaction occurred.

A burning velocity test was performed using the apparatus shown in Fig. 1 in the following manner. First, the mixed refrigerants were purified to 99.5% or more, and were deaerated by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0-9.9 ms, and the ignition energy was typically about 0.1-1.0 J. The propagation of the flame was visualized by schlieren photography. A cylindrical container (inner diameter: 155 mm, length: 198 mm) equipped with two light-transmissive acrylic windows was used as the sample cell, and a xenon lamp was used as the light source. Schlieren images of the flame were recorded by a high-speed digital video camera at a frame rate of 600 fps and stored on a PC. The burning velocity (Su (cm/s)) is expressed by the volume of unburned gas consumed by the flame surface of a unit area per unit time and is calculated by using the following formula.

$$Su = Sb * \rho u / \rho b$$

Sb: flame propagation rate (cm/s)
$\rho u$: adiabatic flame temperature (unburned)
$\rho b$; adiabatic flame temperature (burned)

Sb was determined from the schlieren video images. $\rho u$ was calculated from a measurement temperature. $\rho b$ was calculated from the combustion heat and isobaric specific heat of combustion gas.

Table 1

| Item | Unit | Experimental Series 1 | | |
|---|---|---|---|---|
| | | Comparative Example 4 | Example 6 | Example 7 |
| HFO-1132 (E) | Mass% | 46.0 | 44.0 | 42.0 |
| R1234yf | Mass% | 54.0 | 56.0 | 58.0 |
| Disproportionation reaction (3 Mpa) | - | Explosion | Non-explosion | Non-explosion |
| Burning velocity | cm/s | 5 | 4.7 | 4.4 |

The results in Table 1 show that in the refrigerant according to the present disclosure, disproportionation does not occur in HFO-1132(E) or HFO-1234yf when the amount of HFO-1132(E) is 44.0 mass% or less. Additionally, the burning velocity is 4.7 cm/s or less.
The GWP of HFO-1132(E) and FO-1216 was set to 1, and the GWP of R134a, HFO-1234yf, R125, and the mixed refrigerants was evaluated based on the values stated in the Intergovernmental Panel on Climate Change (IPCC), fourth report. The COP, refrigerating capacity, discharge temperature, and boiling point of R134a, HFO-1234yf, and the mixed refrigerants were determined by performing theoretical refrigeration cycle calculations for mixed refrigerants by using the Reference Fluid Thermodynamic and Transport Properties Database (Refprop 9.0) of the National Institute of Science and Technology (NIST) under the following conditions. The physical property values of HFO-1132(E) used for theoretical refrigeration cycle calculations were obtained from actual measurements.

Evaporating temperature: -30°C
Condensation temperature: 30°C
Superheating temperature: 5 K

Subcooling temperature: 5 K
Compressor efficiency: 70%

In Tables 2, 3, and 4, the "COP ratio" and the "refrigerating capacity ratio" are ratios (%) relative to R1234yf. In the tables, the "discharge temperature (°C)" refers to a temperature at which a refrigerant has the highest temperature in the refrigeration cycle according to the theoretical refrigeration cycle calculations of the mixed refrigerant. In the tables, the "boiling point (°C)" is a temperature at which the liquid phase of a mixed refrigerant has atmospheric pressure (101.33 kPa). In the tables, the "motor power consumption (%)" refers to electrical energy used to enable an electric vehicle to run, and is expressed as a ratio with respect to a power consumption when the refrigerant is HFO-1234yf.

In the tables, the "heater power consumption (%)" refers to electrical energy used to operate a heater by an electric vehicle, and is expressed as a ratio with respect to power consumption when the refrigerant is HFO-1234yf. In the tables, the "drivable distance" refers to a distance drivable by an electric vehicle equipped with a rechargeable battery having a constant electric capacity while having a heater turned on, and is expressed as a ratio (%) relative to a drivable distance (100%) when the electric vehicle is driven without a heater turned on (i.e., heater power consumption is 0).

Heating was performed by using an electric heater in the case of a refrigerant having a boiling point of more than -40°C, and using a heat pump in the case of a refrigerant having a boiling point of -40°C or less.

The power consumption when the heater was used was determined according to the following formula.

Power consumption when the heater was used = heating capacity/COP of heater

The COP of the heater refers to heating efficiency.

With regard to the heating efficiency, the COP of the heater is 1 in an electric heater, and the heater consumes an electrode equivalent to the motor power. That is, the power consumption of the heater is E=E/(1+COP). In the case of a heat pump, the COP of the heater was determined by performing theoretical refrigeration cycle calculations for the mixed refrigerants using Refprop 9.0 (produced by NIST) under the following conditions.

Evaporating temperature: -30°C
Condensation temperature: 30°C
Superheating temperature: 5 K
Subcooling temperature: 5 K
Compressor efficiency: 70%

The drivable distance was calculated according to the following formula.

Drivable distance = (battery capacity)/(motor power consumption + heater power consumption)

Tables 2 and 3 show these values together with the GWP of each mixed refrigerant. The COP and refrigerating capacity are ratios relative to HFO-1234y.

The coefficient of performance (COP) was determined by the following formula.

COP = (refrigerating capacity or heating capacity)/power consumption

Table 2

| Item | | Unit | Reference Example 1 | Comparative Example 1 | Comparative Example 2 | Comparative Example 3 | Example 1 | Example 2 | Example 3 |
|---|---|---|---|---|---|---|---|---|---|
| Composition ratio | HFO-1132 (E) | Mass% | 0.0 | C.0 | 23.0 | 23.0 | 23.0 | 23.0 | 23.0 |
| | HFO-1234yf | Mass% | 0.0 | 100.0 | 77.0 | 73.5 | 70.0 | 67.0 | 56.2 |
| | R134a | Mass% | 100.0 | C.0 | 0.0 | 3.5 | 7.0 | 10.0 | 20.8 |
| | R125 | Mass% | 0.0 | C.0 | 0.0 | 0.0 | 0.0 | 0.0 | 0.0 |
| | FO-1216 | Mass% | 0.0 | C.0 | 0.0 | 0.0 | 0.0 | 0.0 | 0.0 |
| GWP(AR4) | | - | 1430 | 4 | 3 | 53 | 103 | 146 | 300 |
| COP ratio (relative to R1234yf) | | % | 105 | 100 | 100 | 100 | 101 | 101 | 101 |
| Refrigerating capacity ratio (relative to R1234yf) | | % | 99 | 10.0 | 151 | 151 | 152 | 152 | 152 |
| Motor power consumption | | % | 100 | 10.0 | 100 | 100 | 100 | 100 | 100 |
| Heater power consumption | | % | 95 | 10.0 | 33 | 33 | 33 | 33 | 33 |
| Drivable distance (without a heater turned on) | | % | 100 | 10.0 | 100 | 100 | 100 | 100 | 100 |
| Drivable distance (with a heater turned on) | | % | 50 | 50 | 84 | 84 | 84 | 84 | 84 |
| Discharge temperature | | °C | 66.0 | 48.0 | 61.1 | 61.6 | 62.0 | 62.5 | 64.1 |
| Burning velocity | | cm/s | 0.0 | 1.5 | 2.5 | 2.0 | 1.5 | 1.5 or less | 1.5 or less |
| Boiling point | | °C | -26.1 | -29.5 | -44.2 | - 44.0 | -43.8 | -43.7 | -43.2 |
| Heating method | | System | Electric heater | Electric heater | Heat pump | Heat pump | Heat pump | Heat pump | Heat pump |
| Disproportionation reaction (3 Mpa) | | - | Non-explosion | Non-explosion | Non-explosion | Non-explosion | Explosion | Explosion | Explosion |

| Item | | Unit | Comparative Example 5 | Comparative Example 6 | Example 4 | Example 5 | Example 6 | Example 7 | Comparative Example7 |
|---|---|---|---|---|---|---|---|---|---|
| 組成割合 | HFO-1132 (E) | Mass% | 23.0 | 12.0 | 14.0 | 20.0 | 30.0 | 44.0 | 50.0 |
| | HFO-1234 y f | Mass% | 52.0 | 67.2 | 65.2 | 59.2 | 48.2 | 35.2 | 42.5 |
| | R134a | Mass% | 25.0 | 20.8 | 20.8 | 20.8 | 20.8 | 20.8 | 7.5 |
| | R125 | Mass% | 0.0 | C.0 | 0.0 | 0.0 | 0.0 | 0.0 | 0.0 |
| | FO-1216 | Mass% | 0.0 | C.0 | 0.0 | 0.0 | 0.0 | 0.0 | 0.0 |
| GWP(AR4) | | - | 360 | 300 | 300 | 300 | 300 | 300 | 109 |
| COP ratio (relative to R1234yf) | | % | 101 | 101 | 101 | 101 | 101 | 101 | 100 |
| Refrigerating capacity ratio (relative to R1234yf) | | % | 152 | 129 | 134 | 146 | 165 | 190 | 202 |
| Motor power consumption | | % | 100 | 10.0 | 100 | 100 | 100 | 100 | 100 |
| Heater power consumption | | % | 33 | 10.0 | 33 | 33 | 33 | 33 | 33 |
| Drivable distance (without a heater turned on) | | % | 100 | 10.0 | 100 | 100 | 100 | 100 | 100 |
| Drivable distance (with a heater turned on) | | % | 84 | 50 | 84 | 84 | 84 | 84 | 84 |
| Discharge temperature | | °C | 64.9 | 58.8 | 59.9 | 62.8 | 67.1 | 72.7 | 72.3 |
| Burning velocity | | cm/s | 1.5 or less | 1.5 cr less | 1.5 or less | 1.5 or less | 1.5 or less | 1.5 or less | 4.8 |
| Boiling point | | °C | -43.1 | -39.1 | -40.0 | -42.3 | -45.0 | -47.5 | -48.8 |
| Heating method | | System | Heat pump | Electric heater | Heat pump | Heat pump | Heat pump | Heat pump | Heat pump |
| Disproportionation reaction (3 Mpa) | | - | Non-explosion | Non-explosion | Non-explosion | Non-explosion | Non-explosion | Non-explosion | Explosion |

Table 3

| Item | | Unit | Reference Example 1 | Comparative Example 1 | Comparative Example 2 | Comparative Example 12 | Comparative Example 13 | Example 15 | Example 16 | Example 17 |
|---|---|---|---|---|---|---|---|---|---|---|
| Composition ratio | HFO-1132 (E) | Mass% | 0.0 | 0.0 | 23.0 | 23.0 | 23.0 | 23.0 | 23.0 | 23.0 |
| | HFO-1234yf | Mass% | 0.0 | 100.0 | 77.0 | 72.0 | 67.0 | 62.0 | 52.0 | 37.0 |
| | R134a | Mass% | 100.0 | 0.0 | 0.0 | 0.0 | 0.0 | 0.0 | 0.0 | 0.0 |
| | R125 | Mass% | 0.0 | 0.0 | 0.0 | 0.0 | 0.0 | 0.0 | 0.0 | 0.0 |
| | FO-1216 | Mass% | 0.0 | 0.0 | 0.0 | 5.0 | 10.0 | 15.0 | 25.0 | 40.0 |
| GWP(AR4) | | - | 1430 | 4 | 3 | 3 | 3 | 3 | 3 | 2 |
| COP ratio (relative to R1234yf) | | % | 105 | 100 | 100 | 100 | 100 | 100 | 99 | 99 |
| Refrigerating capacity ratio (relative to R1234yf) | | % | 99 | 100 | 151 | 151 | 151 | 151 | 151 | 151 |
| Motor power consumption | | % | 100 | 100 | 100 | 100 | 100 | 100 | 100 | 100 |
| Heater power consumption | | % | 95 | 100 | 33 | 33 | 33 | 33 | 33 | 33 |
| Drivable distance (without a heater turned on) | | % | 100 | 100 | 100 | 100 | 100 | 100 | 100 | 100 |
| Drivable distance (with a heater turned on) | | % | 50 | 50 | 84 | 84 | 84 | 84 | 84 | 84 |
| Discharge temperature | | °C | 66.0 | 48.0 | 61.1 | 60.6 | 60.1 | 59.6 | 58.7 | 57.3 |
| Burning velocity | | cm/s | 0.0 | 1.5 | 2.5 | 2.3 | 2.0 | 1.5 | 1.5 or less | 1.5 or less |
| Boiling point | | °C | -26.1 | -29.5 | -44.2 | -44.1 | -44.0 | -43.9 | -43.7 | -43.4 |
| Heating method | | System | Electric heater | Electric heater | Heat pump | Heat pump | Heat pump | Heat pump | Heat pump | Heat pump |
| Disproportionation reaction (3 Mpa) | | - | Non-explosion | Non-explosion | Non-explosion | Non-explosion | Non-explosion | Non-explosion | Non-explosion | Non-explosion |

EP 4 400 555 B1

| Item | | Unit | Comparative Example 14 | Comparative Example 15 | Example 18 | Example 19 | Example 20 | Example 21 | Comparative Example 16 |
|---|---|---|---|---|---|---|---|---|---|
| Composition ratio | HFO-1132 (E) | Mass% | 23.0 | 10.0 | 12.5 | 20.0 | 30.0 | 44.0 | 50.0 |
| | HFO-1234yf | Mass% | 0.0 | 75.0 | 72.5 | 40.0 | 30.0 | 16.0 | 35.0 |
| | R134a | Mass% | 0.0 | 0.0 | 0.0 | 0.0 | 0.0 | 0.0 | 0.0 |
| | R125 | Mass% | 0.0 | 0.0 | 0.0 | 0.0 | 0.0 | 0.0 | 0.0 |
| | FO-1216 | Mass% | 77.0 | 15.0 | 15.0 | 40.0 | 40.0 | 40.0 | 15.0 |
| GWP(AR4) | | - | 1 | 3 | 3 | 2 | 2 | 1 | 2 |
| COP ratio (relative to R1234yf) | | % | 98 | 99 | 99 | 99 | 99 | 100 | 100 |
| Refrigerating capacity ratio (relative to R1234yf) | | % | 146 | 123 | 129 | 145 | 164 | 189 | 202 |
| Motor power consumption | | % | 100 | 100 | 100 | 100 | 100 | 100 | 100 |
| Heater power consumption | | % | 33 | 100 | 33 | 33 | 33 | 33 | 33 |
| Drivable distance (without a heater turned on) | | % | 100 | 100 | 100 | 100 | 100 | 100 | 100 |
| Drivable distance (with a heater turned on) | | % | 84 | 50 | 84 | 84 | 84 | 84 | 84 |
| Discharge temperature | | °C | 54.2 | 53.3 | 54.7 | 55.9 | 60.3 | 66.2 | 69.9 |
| Burning velocity | | cm/s | 1.5 or less | 1.5 or less | 1.5 or less | 1.5 or less | 1.5 or less | 1.5 or less | 4.8 |
| Boiling point | | °C | -42.3 | -38.7 | -40.0 | -42.5 | -45.1 | -47.6 | -48.8 |
| Heating method | | System | Heat pump | Electric heater | Heat pump | Heat pump | Heat pump | Heat pump | Heat pump |
| Disproportionation reaction (3 Mpa) | | - | Non-explosion | Non-explosion | Non-explosion | Non-explosion | Non-explosion | Non-explosion | Explosion |

The results in Table 2 show that when in the refrigerant according to the present disclosure, when the content of HFO-1132(E) is 14.0-44.0 mass%, the content of HFO-1234yf is 35.2-78.5 mass%, and the content of R134a is 7.0-20.8 mass%, based on the total of HFO-1132(E), HFO-1234yf, and R134a, the refrigerant according to the present disclosure has a GWP of 300 or less, a COP ratio of 100% or more relative to that of HFO-1234yf, a refrigerating capacity ratio of 134% or more relative to that of HFO-1234yf, a burning velocity of 1.5 cm/s or less, which is a burning velocity that, by containing 7.0 mass% or more of R134a, is reduced by 1.0 cm/s or more compared with the case in which R134a is not contained, and a boiling point of -40.0°C or less, and further does not undergo a disproportionation reaction at 3 MPa and 150°C.

The results in Table 3 show that in the refrigerant according to the present disclosure, when the content of HFO-1132(E) is 12.5-44.0 mass%, the content of HFO-1234yf is 16.0-72.5 mass%, and the content of FO-1216 is 15.0-40.0 mass%, based on the total of HFO-1132(E), HFO-1234yf, and FO-1216, the refrigerant according to the present disclosure has a GWP of 3 or less, a COP ratio of 100% or more relative to that of HFO-1234yf, a refrigerating capacity ratio of 128% or more relative to that of HFO-1234yf, a burning velocity that, by containing 3.0 mass% or more of R125, is reduced by 1.0 cm/s or more, and a boiling point of -40.0°C or less, and further does not undergo a disproportionation reaction at 3 MPa and 150°C.

Description of the Reference Numerals

1: Sample cell
2: High-speed camera
3: Xenon lamp
4: Collimating lens
5: Collimating lens
6: Ring filter

**Claims**

1. A composition comprising a refrigerant comprising, based on the entire refrigerant, a total of ≥ 99.5 mass% of trans-1,2-difluoroethylene (HFO-1132(E)), 2,3,3,3-tetrafluoropropene (HFO-1234yf), and 1,1,1,2-tetrafluoroethane (R134a).

2. The composition of claim 1, which contains 14.0-44.0 mass% of HFO-1132(E), 35.2-79.0 mass% of HFO-1234yf, and 7.0-20.8 mass% of R134a, based on the total of HFO-1132(E), HFO-1234yf, and R134a.

3. The composition of claim 2, which contains 21.0-44.0 mass% of HFO-1132(E), 35.2-72.0 mass% of HFO-1234yf, and 7.0-20.8 mass% of R134a, based on the total of HFO-1132(E), HFO-1234yf, and R134a.

4. A composition comprising a refrigerant comprising, based on the entire refrigerant, a total of ≥ 99.5 mass% of HFO-1132(E), HFO-1234yf, and 1,1,2,3,3,3-hexafluoro-1-propene (FO-1216).

5. The composition of claim 4, which contains 12.5-44.0 mass% of HFO-1132(E), 16.0-72.5 mass% of HFO-1234yf, and 15.0-40.0 mass% of FO-1216, based on the total of HFO-1132(E), HFO-1234yf, and FO-1216.

6. The composition of claim 5, which contains 21.0-44.0 mass% of HFO-1132(E), 16.0-64.0 mass% of HFO-1234yf, and 15.0-40.0 mass% of FO-1216, based on the total of HFO-1132(E), HFO-1234yf, and FO-1216.

7. The use of the composition of any of claims 1-6 as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R502, R507, R513A, R1234yf, or R1234ze.

8. The use of the composition of any of claims 1-6 in operating an air-conditioning system for vehicles, preferably gasoline vehicles, hybrid vehicles, electric vehicles, or hydrogen vehicles.

9. The composition of any of claims 1-6 which further comprises a refrigeration oil.

**10.** The use of the composition of claim 9 as a working fluid in a refrigeration apparatus.

**11.** A refrigeration method comprising operating a refrigeration cycle using the composition of any of claims 1-6.

**12.** A refrigeration apparatus comprising the composition of any of claims 1-6 as a working fluid.

**Patentansprüche**

**1.** Zusammensetzung, umfassend ein Kältemittel, das, bezogen auf das gesamte Kältemittel, insgesamt ≥ 99,5 Massen-% trans-1,2-Difluorethylen (HFO-1132(E)), 2,3,3,3-Tetrafluorpropen (HFO-1234yf) und 1,1,1,2-Tetrafluorethan (R134a) umfasst.

**2.** Zusammensetzung gemäß Anspruch 1, die 14,0-44,0 Massen-% HFO-1132(E), 35,2-79,0 Massen-% HFO-1234yf und 7,0-20,8 Massen-% R134a enthält, bezogen auf die Gesamtmenge an HFO-1132(E), HFO-1234yf und R134a.

**3.** Zusammensetzung gemäß Anspruch 2, die 21,0-44,0 Massen-% HFO-1132(E), 35,2-72,0 Massen-% HFO-1234yf und 7,0-20,8 Massen-% R134a enthält, bezogen auf die Gesamtmenge von HFO-1132(E), HFO-1234yf und R134a.

**4.** Zusammensetzung, umfassend ein Kältemittel, das, bezogen auf das gesamte Kältemittel, insgesamt ≥ 99,5 Massen-% HFO-1132(E), HFO-1234yf und 1,1,2,3,3,3-Hexafluor-1-propen (FO-1216) umfasst.

**5.** Zusammensetzung gemäß Anspruch 4, die 12,5-44,0 Massen-% HFO-1132(E), 16,0-72,5 Massen-% HFO-1234yf und 15,0-40,0 Massen-% FO-1216 enthält, bezogen auf die Gesamtmenge an HFO-1132(E), HFO-1234yf und FO-1216.

**6.** Zusammensetzung gemäß Anspruch 5, die 21,0-44,0 Massen-% HFO-1132(E), 16,0-64,0 Massen-% HFO-1234yf und 15,0-40,0 Massen-% FO-1216 enthält, bezogen auf die Gesamtmenge an HFO-1132(E), HFO-1234yf und FO-1216.

**7.** Verwendung der Zusammensetzung gemäß mindestens einem der Ansprüche 1-6 als alternatives Kältemittel für R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R502, R507, R513A, R1234yf oder R1234ze.

**8.** Verwendung der Zusammensetzung gemäß mindestens einem der Ansprüche 1-6 zum Betreiben einer Klimaanlage für Fahrzeuge, vorzugsweise Benzinfahrzeuge, Hybridfahrzeuge, Elektrofahrzeuge oder Wasserstofffahrzeuge.

**9.** Zusammensetzung gemäß mindestens einem der Ansprüche 1-6, die zusätzlich ein Kältemittelöl umfasst.

**10.** Verwendung der Zusammensetzung gemäß Anspruch 9 als Arbeitsfluid in einer Kühlvorrichtung.

**11.** Kühlverfahren, umfassend den Betrieb eines Kühlkreislaufs unter Verwendung der Zusammensetzung gemäß mindestens einem der Ansprüche 1-6.

**12.** Kühlvorrichtung, umfassend die Zusammensetzung gemäß mindestens einem der Ansprüche 1 bis 6 als Arbeitsfluid.

**Revendications**

**1.** Composition comprenant un réfrigérant comprenant, sur la base de l'ensemble du réfrigérant, un total ≥ 99,5 % en masse de trans-1,2-difluoroéthylène (HFO-1132(E)), de 2,3,3,3-tétrafluoropropène (HFO-1234yf) et de 1,1,1,2-tétrafluoroéthane (R134a).

**2.** La composition selon la revendication 1, qui contient de 14,0 à 44,0 % en masse de HFO-1132(E), de 35,2 à 79,0 % en masse de HFO-1234yf et de 7,0 à 20,8 % en masse de R134a, sur la base du total de HFO-1132(E), HFO-1234yf et R134a.

3. La composition selon la revendication 2, qui contient de 21,0 à 44,0 % en masse de HFO-1132(E), de 35,2 à 72,0 % en masse de HFO-1234yf et de 7,0 à 20,8 % en masse de R134a, sur la base du total de HFO-1132(E), HFO-1234yf et R134a.

4. Composition comprenant un réfrigérant comprenant, sur la base de l'ensemble du réfrigérant, un total ≥ 99,5 % en masse de HFO-1132(E), de HFO-1234yf et de 1,1,2,3,3,3-hexafluoro-1-propène (FO-1216).

5. La composition selon la revendication 4, qui contient de 12,5 à 44,0 % en masse de HFO-1132(E), de 16,0 à 72,5 % en masse de HFO-1234yf et de 15,0 à 40,0 % en masse de FO-1216, sur la base du total de HFO-1132(E), HFO-1234yf et FO-1216.

6. La composition selon la revendication 5, qui contient de 21,0 à 44,0 % en masse de HFO-1132(E), de 16,0 à 64,0 % en masse de HFO-1234yf et de 15,0 à 40,0 % en masse de FO-1216, sur la base du total de HFO-1132(E), HFO-1234yf et FO-1216.

7. L'utilisation de la composition de l'une quelconque des revendications 1 à 6 comme réfrigérant alternatif pour R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R502, R507, R513A, R1234yf ou R1234ze.

8. L'utilisation de la composition de l'une quelconque des revendications 1 à 6 dans le fonctionnement d'un système de climatisation pour véhicules, de préférence des véhicules à essence, des véhicules hybrides, des véhicules électriques ou des véhicules à hydrogène.

9. La composition de l'une quelconque des revendications 1 à 6 qui comprend en outre une huile de réfrigération.

10. L'utilisation de la composition de la revendication 9 comme fluide de travail dans un appareil de réfrigération.

11. Procédé de réfrigération comprenant le fonctionnement d'un cycle de réfrigération utilisant la composition de l'une quelconque des revendications 1 à 6.

12. Appareil de réfrigération comprenant la composition de l'une quelconque des revendications 1 à 6 en tant que fluide de travail.

Fig. 1

**EP 4 400 555 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015141678 A